# EUROPÄISCHE PATENTSCHRIFT

(11) **EP 0 498 186 B1**
(45) Veröffentlichungstag und Bekanntmachung des Hinweises auf die Patenterteilung: **14.04.2004**
(21) Anmeldenummer: 92100694.6
(22) Anmeldetag: 16.01.1992
(51) Int. Cl.: G06K 19/08, G07D 7/00, B42D 15/10

(54) **Sicherheitselement und Verfahren zu seiner Herstellung**
Security element and method for its production
Elément de sécurité et méthode de sa production

(30) Priorität: 17.01.1991 DE 4101301
(43) Veröffentlichungstag der Anmeldung: 12.08.1992
(73) Patentinhaber: Giesecke & Devrient GmbH, 81667 München (DE)
(72) Erfinder: Kaule, Wittich, Dr., W-8089 Emmering (DE)
(74) Vertreter: Klunker . Schmitt-Nilson . Hirsch

(56) Entgegenhaltungen:
- EP-A- 0 310 707
- EP-A- 0 330 733
- DE-A- 2 754 267
- GB-A- 1 127 043
- US-A- 4 114 032
- R.M. BOZORTH: "Ferromagnetism", 1951, VAN NOSTRAND, TORONTO
- J. EVETS: " Concise Encyclopedia of Magnetic & Superconducting Materials", 1992, PERGAMON PRESS, OXFORD
- DUDEN, Das grosse Wörterbuch der deutschen Sprache, 1977, DUDENVERLAG

## Beschreibung

Die Erfindung betrifft ein Sicherheitselement für ein Sicherheitsdokument, insbesondere Banknote, Ausweiskarte oder dergleichen, welches aus einer Trägerfolie besteht, die sowohl mit magnetischen Eigenschaften versehen ist, als auch visuell lesbare Zeichen oder Muster aufweist, sowie ein Verfahren zur Herstellung des Sicherheitselements.

Ein Sicherheitsdokument ist aus der DE-PS 16 96 245 bekannt. Nach dem in dieser Schrift beschriebenen Verfahren wird ein geeignetes Trägermaterial, wie z. B. Seide, Baumwolle oder Kunststoff, mit einer magnetischen Überzugsmischung versehen und anschließend in das Sicherheitsdokument eingebettet. Falls das Sicherheitselement als Sicherheitsfaden ausgebildet ist, kann das magnetische Band zusätzlich auf beiden Seiten mit einer lichtundurchlässigen weiß gefärbten Streichmasse überzogen werden. Auf diese Weise ist das dunkle ferromagnetische Material nicht ohne Hilfsmittel zu erkennen. Besonders vorteilhaft ist es bei diesem Sicherheitsfaden, daß er im Auflicht (Reflexion) aufgrund der hohen Lichtreflexion an der weißen Beschichtung und der Lichtstreuung in der den Sicherheitsfaden bedeckenden Papierschicht visuell nahezu nicht zu erkennen ist, daß er sich im Durchlicht (Transmission) aber sehr deutlich als dunkler Strich von seiner Umgebung abhebt. Zusätzlich sind die magnetischen Eigenschaften maschinell eindeutig identifizierbar.

Als nachteilig erweist es sich aber in zunehmenden Maß, daß die Nachahmung der magnetischen Eigenschaften zumindest begrenzt mit im Hand befindlichen Magnetbandmaterialien (Tonbänder, Videobänder etc.) denkbar ist. Außerdem sind die meisten oxydischen Magnetpigmente so dunkel, daß mit vernünftigen Schichtdicken eine völlige weiße Abdeckung nicht gelingt. Ein im Auflicht nahezu unsichtbarer Sicherheitsfaden ist mit den herkömmlichen Mitteln somit entweder nur schwer oder gar nicht realisierbar.

Um die Nachahmung zu erschweren, werden Sicherheitsdokumente nun häufig mit zusätzlichen Sicherheitsmerkmalen versehen, die handelsübliche Magnetbänder nicht aufweisen. Die DE-PS 27 54 267 beschreibt z. B. ein Sicherheitsdokument mit einem Sicherheitselement, das mindestens zwei verschiedene physikalische Eigenschaften aufweist, die unabhängig voneinander geprüft werden können. Eine der physikalischen Eigenschaften ist grundsätzlich magnetischer Natur. Vorzugsweise werden magnetische Materialien mit hoher Koerzitivfeldstärke und Remanenz verwendet, um verschlüsselte Magnetisierungscodes vor unbeabsichtigter Entmagnetisierung zu schützen. Deckungsgleich zu den magnetischen Mustern kann ein UV-fluoreszierendes Material aufgebracht werden. Alternativ kann eine elektrisch leitende Aluminiumbeschichtung vorgesehen werden.

Die Herstellung derartiger Sicherheitselemente ist somit sehr aufwendig und kostenintensiv, da viele einzelne Arbeitsgänge nötig sind, um die einzelnen Materialien mit den verschiedenen physikalischen Eigenschaften nacheinander und zum Teil sogar passergenau aufzubringen.

Um die Fälschungssicherheit von Sicherheitsfäden zu erhöhen, wird in der EP 0 330 733 A1 vorgeschlagen, eine lichtdurchlässige Kunststoffolie mit einer opaken Metallbeschichtung zu versehen, die im Durchlicht visuell lesbare Aussparungen in Zeichenoder Musterform aufweist.

Es wurde auch schon vorgeschlagen, insbesondere Papierdokumente mit Fasern auszustatten, die mit einem magnetischen oder magnetisierbaren.

Material überzogen oder beschichtet wurden (US 4,114,032). Diese Fasern werden in das Ausgangsmaterial der Dokumente eingearbeitet und ermöglichen eine spätere Echtheitsprüfung.

Der Erfindung liegt daher die Aufgabe zugrunde, ein Sicherheitselement vorzuschlagen, das auf einfache Weise herzustellen ist, das sowohl ein helles Erscheinungsbild als auch magnetische Eigenschaften besitzt und das aufgrund der speziellen magnetischen Eigenschaften unverändert schwer nachahmbar ist.

Diese Aufgabe wird erfindungsgemäß durch die in den unabhängigen Ansprüchen genannten Merkmale gelöst.

Die Erfindung zeichnet sich dadurch aus, daß Magnetstoffe verwendet werden, die einerseits die optischen Anforderungen von sich aus besser erfüllen, d. h. anstelle der dunklen oder schwarzen Eigenfarbe als helle Substanz vorliegen und andererseits magnetische Eigenschaften aufweisen, die in der handelsüblichen Magnetbandtechnik nicht verwendbar sind und somit für Manipulationen im Handel auch nicht erhältlich sind.

Weichmagnetisches Reineisen erfüllt diese Anforderungen in hervorragender Weise, da es als helles, silbergraues Pigment herstellbar ist, das in gleicher Weise wie klassische Magnetpigmente verarbeitet werden kann, d. h. auch für die Beschichtung von Folienbändern geeignet ist, aber wegen der geringen oder gar fehlenden Remanenz für Magnetaufzeichnungsverfahren nicht verwendbar ist. Ein mit diesen Pigmenten ausgestatteter Sicherheitsfaden erfüllt somit sowohl die Anforderungen der preiswerten Herstellmöglichkeit als auch, da nicht käuflich als Band erwerbbar, der schweren Zugänglichkeit für Fälscher.

Weichmagnetische Eisenpulverpigmente besitzen eine hohe Permeabilität und weisen wegen des hohen Eisengehalts (typisch 99,5 %) eine mehrfach höhere Sättigungsmagnetisierung als die konventionellen oxydischen Pigmente auf, so daß auch relativ geringe Mengen maschinell noch gut nachweisbar sind. Weitere Eigenschaften sind den Unterlagen der Firma BASF bezüglich der von ihnen hergestellten Carbonyl-Eisenpulver zu entnehmen.

Wegen der fehlenden Remanenz sind die magnetischen Eigenschaften mit einfachen Mitteln nur schwer nachweisbar, sie sind somit für Fälscher auch schwer erkennbar und analysierbar.

Im einfachsten Fall werden die hellgrau bis silbrigen Pigmente für die vorgeschlagenen Anwendungen in einen geeigneten Firnis gemischt und auf ein Trägermaterial aufgestrichen. Der auf diese Weise erhaltene hellgraue Sicherheitsfaden wird auf übliche Weise in das Sicherheitsdokument eingebettet. Durch die dünne Papierfaserauflage verschwindet der Grauton des Fadens, so daß er im Auflicht kaum in Erscheinung tritt.

Aufgrund der genannten besonderen Eigenschaften der weichmagnetischen Pigmente weist ein derartiger Sicherheitsfaden auch ohne zusätzliche physikalische Eigenschaften einen relativ hohen Sicherheitsstandard auf. Darüber hinaus ist wegen der sich von üblichen magnetischen Sicherheitsfäden stark abweichenden physikalischen Eigenschaften ein weiteres Echtheitselement geschaffen, mit dem die Kennzeichnung von Sicherheitsdokumenten zur Unterscheidung von anderen mit magnetischen Sicherheitsfäden möglich ist.

Weitere Ausführungsbeispiele und Vorteile werden anhand der Fig. erläutert.

Es zeigen:
- Fig. 1: Sicherheitsdokument mit eingelagertem Sicherheitselement,
- Fig. 2: Sicherheitsfaden mit heller Magnetpigmentbeschichtung,
- Fig. 3: Negativschrift-Sicherheitsfaden mit heller Magnetbeschichtung im Schnitt,
- Fig. 4: Negativschrift-Sicherheitsfaden mit heller Magnetbeschichtung in Aufsicht.

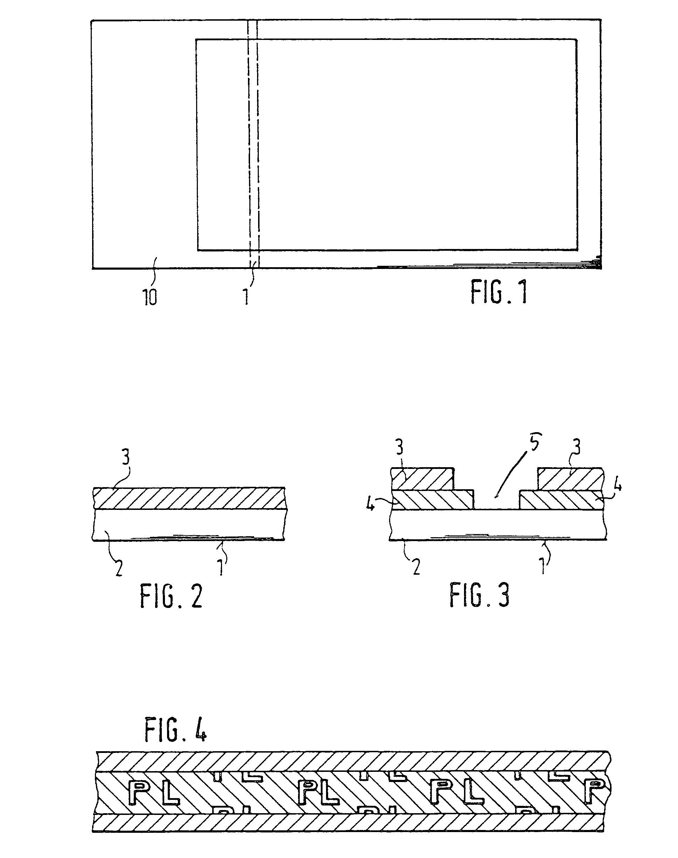

Fig. 1 zeigt eine Banknote 10 mit eingelagertem Sicherheitsfaden gemäß der Erfindung. Der Faden ist hier vollständig in das Papiermaterial eingebettet, was durch die gestrichelten Linien angedeutet wird. Es ist jedoch auch möglich, den Faden in Form eines sogenannten Fenster-Sicherhetisfadens einzubringen, so daß er in bestimmten Abständen direkt an die Dokumentenoberfläche tritt.

In Fig. 2 ist ein Sicherheitsfaden 1 im Schnitt dargestellt, bei dem es sich nicht um ein Ausführungsbeispiel der Erfindung handelt, sondern um ein Beispiel, welches das Verständnis der Erfindung erleichtert. Er besitzt eine hellgraue, ins silbrige gehende Farbe und wird hergestellt, indem auf ein Trägermaterial 2, wie z. B. eine Kunststoffolie, ein in einen geeigneten Firnis gemischtes helles Weichmagnetpigment aufgestrichen wird. Hierfür eignet sich z. B. das Pigment CEP-SQ (BASF), das bislang hauptsächlich in der Elektronik für ferromagnetische Spulenkerne Anwendung fand.

Wahlweise kann dieses Pigment auch einer weißen Farbe zugesetzt werden, welche anschließend auf das Trägermaterial aufgebracht wird. Da die Pigmente auch in geringen Konzentrationen noch nachweisbar sind, kann auf diese Weise das helle Erscheinungsbild des Fadens zusätzlich variiert werden. Der gleiche Effekt kann durch Überdrucken des grauen Fadenmaterials mit einer dünnen Schicht weißer Farbe erreicht werden. Auf diese Weise erhält man ein Sicherheitselement, das bei Betrachtung des Sicherheitsdokuments im Auflicht kaum erkennbar ist. Für den Fall, daß das Sicherheitselement diese Bedingung nicht erfüllen muß und farbig ausgeführt ist, kann das magnetische Pigment natürlich auch diesen Farben zugesetzt werden. Im Gegensatz zu den herkömmlichen dunklen Magnetpigmenten können die hellen weichmagnetischen Pigmente sogar mit hellen Farblösungen vermischt oder überdruckt werden, ohne daß der Farbton durch die Eigenfarbe der Magnetpigmente beeinträchtigt wird. Somit ist es möglich, beliebig ausgestaltete, farbige magnetische Muster oder Zeichen zu erzeugen.

Die Verarbeitung erfolgt sinnvollerweise in Bögen, die zum Schluß in Fäden gewünschter Breite und Länge geschnitten werden.

Die hellen Weichmagnetpigmente werden sehr vorteilhaft zusammen mit metallischen Streifen verwendet, die Negativschriftzeichen enthalten.

In diesem Fall wird, wie in Fig. 3 dargestellt, das Trägermaterial 2 mit einer Metallschicht 4 bedampft, in welche Aussparungen 5 in Form von Zeichen oder Mustern mit dem Fachmann bekannten Verfahren eingebracht werden. Passerhaltig und symmetrisch zu dieser Negativschrift sind Balken aus heller Magnetfarbe 3 aufgedruckt.

Die Herstellung eines derartigen Fadens erfolgt ebenfalls in Bögen, die anschließend in Streifen geschnitten werden. In einem ersten Verfahrensschritt wird eine Trägerfolie 2 vollflächig metallisch beschichtet und im Anschluß daran nach einem der z. B. aus der EP-OS 0 330 733 bekannten Verfahren mit einer Negativschrift versehen. Dabei wird der Text derart in paralleler Spaltenanordnung eingebracht, daß er in benachbarten Spalten um den halben,Zeilenabstand versetzt ist, wie in Fig. 4 dargestellt. Parallel zu den Schriftzeichen 4 werden die Balken aus hellem Weichmagnetpigment aufgedruckt, wobei darauf zu achten ist, daß die hellen Weichmagnetstreifen seitlich passerhaltig zu der Negativschrift angeordnet sind.

Alternativ kann die das magnetische Pigment enthaltende Schicht auch vollflächig über der Negativschrift und der umgebenden Metallisierung aufgebracht werden, wobei die Magnetschicht so dünn zu wählen ist, daß sie im Durchlicht eine ausreichende Transparenz aufweist bzw. eine visuelle Überprüfung der Negativschriftzeichen noch ermöglicht. Bringt man einen derartigen dreischichtigen Sicherheitsfaden als sogenannten Fenster-Sicherheitsfaden ins Papier ein, wobei die transparente Trägerfolie als äußere Schicht auf der Wertpapieroberflächenseite zum Schutz der anderen Schichten angeordnet wird, so erhält man ein Wertpapier, bei dem im Auflicht der Eindruck eines einfachen, ganzflächig metallisierten Sicherheitsfadens erscheint, der bekannterweise in dieser Form von Kopiergeräten nicht wiedergegeben werden kann. Im Durchlicht ist jedoch die Negativschrift visuell ausreichend gut zu erkennen und zu überprüfen.

Ein derartiger Sicherheitsfaden ist somit neben den magnetischen Eigenschaften auch elektrisch leitfähig und weist im Durchlicht visuell erkennbare Mikroschriftzeichen auf.

## Patentansprüche

1. Sicherheitselement (1) in Form eines Fadens oder Bandes zur Einbettung in ein Sicherheitsdokument (10), insbesondere Banknote oder Ausweiskarte, bestehend aus einem Kunststoffsubstrat (2), das eine elektrisch leitende metallische Schicht (4) mit im Durchlicht visuell lesbaren Aussparungen (5), insbesondere in Form von Zeichen oder Mustern aufweist, **dadurch gekennzeichnet, daß** das Sicherheitselement (1) zumindest in Teilbereichen eine zusätzliche, maschinell prüfbare magnetische Schicht (3) aufweist, welche helle, weichmagnetische Pigmente aufweist, und daß die magnetische Schicht (3) über der metallischen Schicht (4) angeordnet ist, wobei die visuell lesbaren Aussparungen im Durchlicht erkennbar sind.

2. Sicherheitselement (1) nach Anspruch 1, **dadurch gekennzeichnet, daß** die magnetische Schicht (3) in Teilbereichen über der metallischen Schicht angeordnet ist, wobei die metallische Schicht (4) zumindest in den magnetschichtfreien Zwischenbereichen mit den visuell lesbaren Aussparungen (5) versehen ist.

3. Sicherheitselement (1) nach Anspruch 2, **dadurch gekennzeichnet, daß** die magnetische Schicht (3) in Form von Streifen oder Balken vorliegt.

4. Sicherheitselement (1) nach Anspruch 3, **dadurch gekennzeichnet, daß** die magnetische Schicht (3) passerhaltig und symmetrisch zu den visuell lesbaren Aussparungen (5) angeordnet ist.

5. Sicherheitselement (1) nach Anspruch 1, **dadurch gekennzeichnet, daß** die magnetische Schicht (3) vollflächig über der metallischen Schicht (4) angeordnet ist und eine ausreichende Transparenz aufweist, so daß die Aussparungen (5) im Durchlicht erkennbar sind.

6. Sicherheitsdokument (10), insbesondere Banknote oder Ausweiskarte, mit einem eingebetteten Sicherheitselement gemäß wenigsten einem der Ansprüche 1 bis 5.

7. Verfahren zur Herstellung eines Sicherheitselements in Form eines Fadens oder Bandes, welches in ein Sicherheitsdokument, insbesondere Banknote oder Ausweiskarte eingebettet wird und aus einem Kunststoffsubstrat besteht, das eine elektrisch leitende, metallische Schicht und eine maschinell prüfbare magnetische Schicht aufweist, bei dem
- eine Trägerfolie vollflächig mit einer metallischen Schicht versehen wird, in die im Durchlicht visuell lesbare Aussparungen in Form von Zeichen oder Mustern eingebracht werden,
- die Folie in Sicherheitselemente vorgegebener Form geschnitten wird,
**dadurch gekennzeichnet, daß** vor dem Schneiden der Folie über der metallischen Schicht zumindest in Teilbereichen eine magnetische Schicht, welche helle, weichmagnetische Pigmente aufweist, aufgebracht wird, wobei die visuell lesbaren Aussparungen im Durchlicht erkennbar sind,

8. Verfahren zur Herstellung eines Sicherheitsdokuments, insbesondere Banknote oder Ausweiskarte, **dadurch gekennzeichnet, daß** in das Dokument ein Sicherheitselement eingebettet wird, das nach einem Verfahren gemäß Anspruch 8 hergestellt wurde.

## Claims

1. A security element (1) in the form of a thread or band to be embedded in a security document (10), in particular a bank note or identity card, consisting of a plastic substrate (2) having an electrically conductive metallic layer (4) with recesses (5) visually readable in transmitted light, in particular in the form of characters or patterns, **characterized in that** the security element (1) has at least in partial areas an additional machine testable magnetic layer (3) having light soft-magnetic pigments, and the magnetic layer (3) is disposed above the metallic layer (4), the visually readable recesses being recognizable in transmitted light.

2. A security element (1) according to claim 1, **characterized in that** the magnetic layer (3) is disposed above the metallic layer in partial areas, the metallic layer (4) being provided with the visually readable recesses (5) at least in the magnetic-layer-free intermediate areas.

3. A security element (1) according to claim 2, **characterized in that** the magnetic layer (3) is present in the form of strips or bars.

4. A security element (1) according to claim 3, **characterized in that** the magnetic layer (3) is disposed in register and symmetrically with the visually readable recesses (5).

5. A security element (1) according to claim 1, **characterized in that** the magnetic layer (3) is disposed all over the metallic layer (4) and has sufficient transparency so that the recesses (5) are recognizable in transmitted light.

6. A security document (10), in particular a bank note or identity card, having an embedded security element according to at least one of claims 1 to 5.

7. A method for producing a security element in the form of a thread or band that is embedded in a security document, in particular a bank note or identity card, and consists of a plastic substrate having an electrically conductive metallic layer and a machine testable magnetic layer wherein
- a carrier film is provided all over with a metallic layer in which recesses in the form of characters or patterns visually readable in transmitted light are incorporated,
- the film is cut into security elements of predetermined form,
**characterized in that** before the film is cut, a magnetic layer having light soft-magnetic pigments is applied above the metallic layer at least in partial areas, the visually readable recesses being recognizable in transmitted light.

8. A method for producing a security document, in particular a bank note or identity card, **characterized in that** a security element produced by a method according to claim 8 is embedded in the document.

## Revendications

1. Elément de sécurité (1) en forme de fil ou de bande pour l'intégration dans un document de sécurité (10), en particulier un billet de banque ou une carte d'identité, se composant d'un support en plastique (2) qui comporte une couche métallique électroconductrice (4) avec des évidements (5) visuellement lisibles par transparence, en particulier sous forme de signes ou de dessins, **caractérisé en ce que** l'élément de sécurité (7) comporte au moins dans des sous-champs une couche magnétique (3) supplémentaire contrôlable par machine, laquelle comporte des pigments clairs de coercitivité basse et **en ce que** la couche magnétique (3) est disposée par-dessus la couche métallique (4), les encoches visuellement lisibles étant identifiables par transparence.

2. Elément de sécurité (1) selon la revendication 1, **caractérisé en ce que** la couche magnétique (3) est disposée dans des sous-champs par-dessus la couche métallique, la couche métallique (4) étant équipée d'encoches (5) visuellement lisibles, au moins dans les espaces intermédiaires sans revêtement magnétique.

3. Elément de sécurité (1) selon la revendication 2, **caractérisé en ce que** la couche magnétique (3) se présente sous forme de bandes ou de traits.

4. Elément de sécurité (1) selon la revendication 3, **caractérisé en ce que** la couche magnétique (3) est disposée avec des points de repère et symétriquement aux encoches visuellement lisibles.

5. Elément de sécurité (1) selon la revendication 1, **caractérisé en ce que** la couche magnétique (3) est disposée sur toute la surface de la couche métallique (4) avec une transparence suffisante de manière à ce que les encoches (5) soient identifiables par transparence.

6. Document de sécurité (10), en particulier billet ou carte d'identité, avec un élément de sécurité intégré selon au moins l'une des revendications 1 à 5.

7. Procédé de fabrication d'un élément de sécurité en forme de fil ou de bande, lequel est intégré dans un document de sécurité, en particulier un billet de banque ou une carte d'identité, et se compose d'un support plastique, qui comporte une couche métallique électroconductrice et une couche magnétique contrôlable par machine, dans lequel
une plaque support est revêtue sur toute la surface d'une couche métallique dans laquelle des encoches visuellement lisibles par transparence sont insérées sous forme de signes ou de dessins,
la plaque est découpée en éléments de sécurité d'une forme prédéfinie,
**caractérisé en ce que**, avant la découpe de la plaque une couche magnétique comportant des pigments clairs de coercitivité basse est mise en place sur la couche métallique au moins dans des sous-champs, les encoches visuellement lisibles étant identifiables par transparence,

8. Procédé de fabrication d'un document de sécurité, en particulier un billet de banque ou une carte d'identité, **caractérisé en ce qu'**un élément de sécurité est intégré dans le document, fabriqué selon un procédé conforme à la revendication 8.
